# EUROPEAN PATENT APPLICATION

(11) **EP 4 575 866 A1**
(43) Date of publication of application: **25.06.2025**
(21) Application number: 24221547.3
(22) Date of filing: 19.12.2024
(51) Int. Cl.: G06F 21/62, G06N 3/045, G06N 20/00, H04L 9/00

(54) **LARGE LANGUAGE MODEL(S) SYSTEM FOR CAPTURING, MAINTAINING, AND SEPARATING COPYRIGHTED INFORMATION WITHIN A BLOCKCHAIN NETWORK WITH AUTOMATIC OUTPUT OF INFORMATION**

(30) Priority: 20.12.2023 US 202363612992 P; 11.11.2024 US 202418943732
(71) Applicant: Pangee, Inc., New York, New York NY 10012 (US)
(72) Inventor: LEHMANN, Laura, New York, New York 10012 (US); TUNGKASIRI, Sorat, New York, New York 10012 (US)
(74) Representative: Boult Wade Tennant LLP

(57) **Abstract**

Tracking data input to a generative artificial intelligence model (generative AI) or a large language model (LLM) involves receiving a plurality of objects comprising the data input to the model, generating a corresponding non-fungible token (NFT) for each object, assigning a corresponding smart contract to each NFT to control interactions with the NFT and its corresponding object, recording the NFT and corresponding smart contract to a block for writing to a blockchain, and writing the block to the blockchain.

## Description

### CLAIM OF PRIORITY

This application claims the benefit of U.S. Nonprovisional Patent Application No. 18/943,732, filed November 11, 2024, entitled, "LARGE LANGUAGE MODEL(S) SYSTEM FOR CAPTURING, MAINTAINING, AND SEPARATING COPYRIGHTED INFORMATION WITHIN A BLOCKCHAIN NETWORK WITH AUTOMATIC OUTPUT OF INFORMATION," which claims benefit of priority to Provisional Patent Application No. 63/612,992, filed December 20, 2023, entitled "LARGE LANGUAGE MODEL SYSTEM FOR CAPTURING, MAINTAINING AND SEPARATING COPYRIGHTED INFORMATION WITHIN A BLOCKCHAIN NETWORK WITH AUTOMATIC SURFACING OF INFORMATION", the disclosure of which is incorporated by reference herein in its entirety.

### TECHNICAL FIELD

Embodiments of the invention relate generally to the field of tracking and/or separating data input to a generative artificial intelligence model (generative AI) or a large language model (LLM), generating a corresponding non-fungible token (NFT) for each object of data, assigning a corresponding smart contract to each NFT to control interactions with the NFT and its corresponding object, recording the NFT and corresponding smart contract to a block for writing to a blockchain, and writing the block to the blockchain.

### BACKGROUND

Copyrighted materials, ranging from literature (books, journals, research materials, websites, etc.) and music to software code and digital media, play a pivotal role in our modern world. They serve as a cornerstone of creativity, innovation, and intellectual property protection. The importance of separating and tracking copyrighted materials and respecting the ownership of such materials cannot be overstated.

Copyright serves as a legal framework that safeguards the rights of creators and encourages the production of new and innovative content. By granting creators exclusive rights to their works for a limited time, it provides an incentive to invest time, effort, and resources into the creative process. Without this protection, creators might be discouraged from producing high-quality, original content, fearing that their work will be copied or exploited without their consent.

The ownership of copyrighted materials is essential for fostering innovation. When creators have ownership rights over their works, they are more likely to invest in research and development, creating a culture of innovation. This process has a domino effect, leading to advancements in various fields, such as science, technology, and the arts.

Copyrighted materials contribute significantly to the global economy. The entertainment, publishing, and software industries, among others, rely on the revenue generated from the sale and licensing of copyrighted materials. This revenue not only supports creators but also provides employment opportunities and contributes to economic growth.

Furthermore, copyright infringement can have detrimental economic effects. It can lead to revenue losses for creators and organizations, discouraging investment in future projects and potentially resulting in job losses. Effective separation and protection of copyrighted materials are, therefore, crucial for maintaining economic stability and growth.

Copyrighted materials are often a reflection of a society's culture and history. They preserve stories, traditions, and ideas for future generations. Ownership of these materials ensures that they are properly maintained, archived, and made accessible to the public, contributing to the preservation of cultural heritage.

When ownership rights are respected, creators and organizations are motivated to invest in the restoration and digitization of historical works, making them available to a wider audience. This not only enriches our understanding of the past but also promotes cultural diversity and understanding.

Copyrighted materials play a vital role in education and the dissemination of knowledge. Creators are more likely to produce educational content, textbooks, and research papers when they know their intellectual property rights will be protected. These materials are essential for the growth of human knowledge and the advancement of society.

Ownership of copyrighted materials also allows for the fair compensation of educators, researchers, and content creators, encouraging them to continue producing high-quality educational resources. This, in turn, enhances the quality of education and contributes to the development of a knowledgeable and skilled workforce.

Generative Artificial Intelligence models (Generative AIs) and Large Language Models (LLMs) represent two domains within the field of artificial intelligence. Generative AI encompasses a wide array of AI systems that produce new and innovative content, including text, images, music, and computer code. In contrast, LLMs are a specific category of generative AI with a specialized focus on producing new text-based data.

Generative AI refers to the broader concept of artificial intelligence models capable of generating new content. These models are designed to create text or other forms of media based on patterns and examples they have been trained on. They use sophisticated algorithms to understand context, grammar, and style to produce coherent and meaningful output. LLMs, in contrast, specifically focus on language modeling. These models are trained on vast amounts of text data and learn the statistical properties of language. They excel at predicting what comes next in a sequence of words or generating text based on a prompt.

Generative AI undergo extensive training on large datasets to assimilate the underlying patterns and relationships present within that data. Once trained, they have the capacity to generate novel content that aligns with the characteristics of the training data. For instance, a generative AI trained on images of cats can be harnessed to create entirely new cat images that did not exist before. LLMs, on the other hand, undergo rigorous training on vast volumes of text data, encompassing sources like books, articles, and code. After their training is complete, LLMs are primed for text-related tasks, including text generation (including human-like text), language translation, and content creation across various genres, and providing informative responses to queries.

In either situation, the quality of the training data is very important. High-quality, diverse training data is essential for generative AI to produce meaningful and creative outputs. LLMs require large, clean text corpora for effective language understanding and generation. To that end, OpenAI, Microsoft, and Google have trained chatbots for their generative AI and Large Language Models using online copyrighted materials including such sources as, but not limited to, journal articles, newspaper articles, film and television scripts and content, novels, Wikipedia posts, and even fashion runway photos, resulting in a flurry of lawsuits in the United States alleging, among other things, copyright infringement. The lawsuits accuse OpenAI and Microsoft of using millions of copyrighted articles without permission to train and feed their generative AI products and argue copyright holders of such articles are owed compensation from the use of the content. The complaints contend AI chatbots regularly surface the entire text of articles that are otherwise behind subscription paywalls for users and often do not prominently link back to the source, allegedly reducing the need for readers to pay subscriptions to support, for example, local newspapers, and deprive publishers of revenue both from subscriptions and from licensing their content elsewhere. Complaints also allege inaccurately or falsely crediting publishers or publications for inaccurate or misleading information, tarnishing the publisher's reputations, and spreading newly generated, even potentially dangerous, misinformation.

Thus, what is needed, given today's multitude of "off-the shelf' open-source generative AIs and LLMs, is a way to develop a generative AI model or LLM based conversational chatbot that addresses the above-described problems.

### BRIEF DESCRIPTION OF THE DRAWINGS

Embodiments are illustrated by way of example, and not by way of limitation, and can be more fully understood with reference to the following detailed description when considered in connection with the figures in which:
**Figure 1** is a functional block diagram illustrating a user's interactions with a publisher's data according to embodiments of the invention.
**Figure 2** is a functional block diagram illustrating the user's interactions with a webpage they are viewing according to embodiments of the invention.
**Figure 3** is a functional block diagram of a publisher's interaction with a blockchain according to embodiments of the invention.
**Figure 4** is a functional block diagram of a user's interaction with the blockchain according to embodiments of the invention.
**Figure 5** is a block diagram of a computing system according to aspects of the disclosure.
**Figure 6** is a flowchart of a method according to aspects of the disclosure.

### DETAILED DESCRIPTION

Embodiments of invention implement an intermediary generative AI or Large Language Model (LLM), hereinafter collectively referred to as "the model", that operates in conjunction with a search algorithm to compartmentalize copyrighted data, that is, without integrating the copyrighted data directly into training the model. According to one embodiment, the intermediary model operates in conjunction with a search algorithm such as described in U.S. Patent Application No. 18/208,683, filed June 12, 2023, entitled "System and Method for Automated Integration of Contextual Information with Content Displayed in a Display Space", the disclosure of which is incorporated by reference herein in its entirety, and/or such as described in U.S. Patent Application No. 18/510,556, filed November 15, 2023, entitled "System and Method for Automated Integration of Contextual Information with a Series of Digital Images Displayed in a Display Space", the disclosure of which is incorporated by reference herein in its entirety.

Thus, publishers may, at any given time, opt out of sharing their data to avoid the data being used in model training in possible violation of any copyrights thereto held by the publishers.

This separation of copyrighted data from an open-source model allows tracking the source of search results or words in a chatbot for models. In the age of AI and "fake information," tracking the sources of words, and for that matter, tracking the sources of sentences, code, or any snippets of text, adds value to publishers across industries, beyond mere remuneration for their copyrighted materials. Moreover, within the concept of information surfacing as described in the above-mentioned U.S. Patent Application No. 18/208,683 and U.S. Patent Application No. 18/510,556, there is strong value in positioning multiple adjacent, if not conflicting, sources to the source with which the reader is presently engaged. This type of cross referencing, typically otherwise done via multiple web-browser searches (e.g., performing multiple Google searches), can be of added value in certain industries that necessitate the review of precise and differentiated information, from politics to medicine.

The present disclosure describes a system and method for generative AIs or large language model(s) (LLMs), collectively referred to herein as "the model" or "the models" in chatbot/chatbot-like applications that capture and analyze data in real-time while maintaining a clear delineation of copyrighted materials. The system and method include automatic analysis of information on a web page as it is loaded and provides new information for users to engage with based on the contents of the web page (including text and media) through conversational directives. This new information surfacing provides insights such as summaries, external links to more information (both curated and un-curated), and/or multimedia content, for example, through highlighting and/or through heat-mapping. The system and method maintain a separate network for copyrighted materials written onto a blockchain, for example, for data access control/versioning, tracking, and authenticating by publishers.

### Separation of Generative Al or LLMs and copyrighted materials

Embodiments of the invention include a system and method for a model with trained/pretrained data that separates and tracks data input to the model, e.g., copyrighted data, from the new information provided or output by the model based on the input data.

Current models are trained on large sets of information taken from the internet. Most models scrape all information that is "public" on the internet and use the scraped information to train the model. Once the model is trained on the information, the information can no longer be separated without retraining the model. Most models, and the companies that operate them, also do not provide credit or compensation to the original author/owner of the content.

In contrast, embodiments described herein keep input data, e.g., copyrighted materials, separate from the data produced by a model, for example, to mitigate or avoid copyright infringement. This allows data/content owners, copyright holders, and/or publishers to control, monitor, add, and remove the data that is input to, and/or being used by the model at any given time. The system keeps copyrighted materials separate by loading data through a series of interconnected databases, the use of communication protocols (such as APIs), and the use of blockchain technology for access control and authorization, as described further below.

Some of the disclosed embodiments not only separate copyrighted materials from the models, they also measure and analyze the data that is being used, which is an important process for the copyright owners, especially in the context of quality, accuracy, reliability, data confidence, and regulatory compliance. According to one embodiment, a data measurement system is employed that provides a statistical analysis to assess the accuracy and reliability of both qualitative and quantitative data generated by the model. This measurement tool measures output for the model to ensure that the information being produced is accurate and/or reliable.

Quality assurance helps ensure the quality of input and output data. Embodiments assess the data measurement system's capability to capture accurate and reliable data, which is essential for generating trustworthy information and responses.

Accuracy assessment evaluates the accuracy of data by analyzing the measurement process, which includes any potential errors or biases. Inaccurate data can lead to incorrect conclusions and outputs. Ensuring data accuracy is especially critical when the information generated by the model(s) is used for decision-making or critical applications.

Reliability evaluation assesses the reliability of data by examining factors such as repeatability and reproducibility. In the context of an LLM, this means assessing whether the LLM consistently provides the same or similar outputs for the same inputs. Reliability is crucial for ensuring consistent and dependable results.

Process improvement identifies and quantifies sources of variation and error in the measurement system, which provides insights into areas that need improvement. In the case of an LLM, it can help identify weaknesses in the LLM's training data or algorithms, allowing for refinements to enhance its performance.

Data confidence helps establish confidence in the data and the outputs generated by the model(s). This is particularly important when the information is used for critical applications like healthcare diagnoses, financial predictions, or autonomous systems.

Cost reduction detects and addresses measurement errors and inaccuracies early in the process that can lead to cost savings. Inefficient or unreliable data can lead to wasted resources, rework, or incorrect decisions, all of which can be costly.

Regulatory compliance in regulated industries may be a requirement to meet compliance standards. Ensuring accurate and reliable data is often mandated to maintain product safety and quality.

### Blockchain mechanism for tracking data, e.g., copyrighted materials, input to generative AIs or LLMs

Blockchain technology, initially designed as the underlying framework for cryptocurrencies like Bitcoin, has evolved into a revolutionary force with applications extending far beyond digital currencies. One of its most profound contributions is its ability to transform how transactions are tracked, maintain access control levels, and establish ownership of data using smart contracts. This section discusses the intricate workings of blockchain technology and how copyrighted materials are cataloged, stored, accessed, and controlled by content owners in models using blockchain technology, according to embodiments of the invention.

At the heart of blockchain technology lies decentralization. Traditional systems rely on centralized authorities, such as banks or governments, to validate and record transactions. In contrast, blockchain operates on a decentralized network of computers, known as nodes, which work together to validate and record transactions. This decentralized nature ensures that no single entity has ultimate control, making it tamper-resistant and highly secure.

Blockchain employs an electronic distributed ledger, which is a chronological and immutable record of all transactions across the network. Each block on the chain contains a list of transactions, and these blocks are linked together to form a continuous chain. Once data is added to a block, it becomes extremely difficult to alter, guaranteeing the integrity of the information stored on the blockchain.

Blockchain's transparency is a key feature that enables transaction tracking. Every participant on the network has access to the entire transaction history, which is stored on every node. This transparency ensures that anyone can verify the authenticity of a transaction and trace its origin, eliminating the need for intermediaries to establish trust.

To ensure accurate transaction tracking, blockchain networks rely on consensus mechanisms. In contrast to the consensus protocol known as Proof of Work (PoW), which requires nodes to solve complex mathematical puzzles, the consensus protocol known as Proof of Stake (PoS) is employed in many blockchain networks. In PoS, validators are chosen to create new blocks and validate transactions based on the number of tokens they "stake" or lock up as collateral. This energy-efficient mechanism ensures that only valid transactions are recorded, enhancing the reliability of transaction tracking.

Access control on a blockchain is established through cryptographic keys. Each participant has a pair of keys: a public key, which is their address on the blockchain, and a private key, which is a secret code only known to them. This cryptographic security ensures that only the owner of a private key can access and control their assets or data on the blockchain.

Blockchain networks can be categorized as either permissioned or permissionless. Permissioned blockchains restrict access to predefined participants, granting them specific access levels based on their roles. Permissionless blockchains, like Bitcoin, allow anyone to participate but maintain strict access control through cryptographic means. Permissioned blockchains are often favored in enterprise settings, while permissionless blockchains offer open access to the public.

Smart contracts are self-executing contracts with the terms of the agreement written directly into machine executable code. These contracts are stored on the blockchain and automatically execute when predefined conditions are met. By leveraging smart contracts, ownership and control of assets or data can be encoded directly into the blockchain, eliminating the need for intermediaries.

According to embodiments of the invention, each object, e.g., each document, ingested by the system is automatically turned, or minted, into a non-fungible token (NFT) and assigned or associated with a corresponding smart contract. NFTs are unique digital assets, and smart contracts can facilitate their creation, transfer, and management in various ways. The following discussion provides an overview of how smart contracts can track NFTs. Smart contracts can define the rules and properties of NFTs. When owners want to create a new NFT, they interact with the smart contract by calling a specific function. The smart contract will generate a unique identifier (token ID) for the NFT and associate it with relevant metadata, such as but not limited to:
The title of the work, which is typically the name of the book, film, song, or other creative work.
Author/Creator: The name of the individual or entity responsible for creating the work. This can include authors, artists, musicians, and more.
Date of Creation: The date when the work was created or published, which can be important for determining copyright duration.
Copyright Holder: The name and contact information of the individual or entity that holds the copyright for the work.
Copyright Status: Information about the copyright status of the work, including the copyright registration number, if applicable.
Description: A brief description of the work, which can include genre, subject matter, and other relevant details.
Keywords and Tags: Descriptive keywords and tags that help with search and categorization of the work.
Rights Information: Information about the specific rights associated with the work, including usage permissions and restrictions.
Source or Origin: Information about the source or origin of the work, such as the publisher, production company, or studio.
Format: Details about the format of the work, whether it's a book, video, audio recording, or other media type.
File Name: The name of the digital file associated with the work, which can help with digital asset management.
Location: Information about where the physical or digital copy of the work is stored or can be accessed.
Related Works: References to other works that are related to or derivative of the copyrighted material.
Version Information: Details about different versions or editions of the work, if applicable.
Language: The language in which the work is written or produced.
Identifier: A unique identifier or code that can be used to distinguish the work from others.
Publisher/Label: Information about the publishing company, record label, or studio responsible for distributing the work.
Cover Art: If applicable, an image or representation of the work's cover art or promotional material.
Usage History: Records of how the work has been used, licensed, or distributed.
Access and Usage Restrictions: Any restrictions on who can access, use, or distribute the work, such as licensing terms and access permissions.

Smart contracts maintain a ledger of NFT ownership. The ledger keeps a record of unique addresses that holds NFTs. Smart contracts can enforce access control rules for NFTs. These restrictions can be enforced by the owners to: set transfer restrictions, usage restrictions (time-based restrictions), define conditions of use (some entities are allowed to use, but other entities are not), time-locks, transferability, tracking of usage data, automated remuneration, e.g., in the form of a royalty payment or distribution percentages, when the NFT is used or accessed, such as when a summary derived from the object corresponding to the NFT is viewed by a user, when the actual object, e.g., an article, is viewed by the user in addition to or rather than a summary based on the actual object, or when a user downloads a copy of the object, e.g., a digital copy of an article.

Access control for NFTs refers to the rules and conditions that determine who can perform certain actions with an NFT, such as adding, removing, transferring, and modifying it and/or its associated metadata, or interacting with it in specific ways. Smart contracts can be used to enforce access control for NFTs, ensuring that the NFT's properties and functionality are used according to predefined rules.

The most basic form of access control is ownership control. The smart contract records the current owner of an NFT, and only the owner (the holder of the private key associated with the owning address) has the authority to transfer or make changes to the NFT.

Smart contracts can restrict the transfer of NFTs to specific addresses or accounts. This can be done by specifying a list of allowed addresses that are allowed to receive the NFT when it's transferred. This is useful for creating permissioned NFTs that can only be owned by certain individuals or entities. This ownership can also be temporarily set as well.

Access control can be based on conditions. For example, a smart contract might allow the access of a NFT only if certain conditions are met, such as providing specific credentials for access rights to the NFT or by a specific address of individuals and/or entities.

Access to NFTs can be time limited. Smart contracts can be programmed to allow transfers or modifications of NFTs only after a specific date or within a certain time frame. This is often used for promotional NFTs or time-sensitive events. Owners can set and modify term limits of the NFT.

Access control rules can be highly customizable. Smart contracts can implement complex, custom logic for determining who can perform specific actions based on various factors, including external data sources or oracle inputs.

Some NFT contracts are designed to be upgradeable, allowing developers to modify access control rules and functionality over time through upgrades to the smart contract code.

Access control for NFTs is essential for ensuring that NFTs are used in accordance with their intended purposes and to meet legal and regulatory requirements. It can also be used to implement various business models and governance structures within NFT ecosystems, providing flexibility and security for NFT creators and owners.

### Blockchain mechanism to digitally allow users to add or remove personal identifiable information

A cryptographic digital wallet, often referred to simply as a "cryptocurrency wallet" or "crypto wallet" or "digital wallet," is a software application or hardware device that allows individuals to securely store, manage, and interact with their personal identifiable information (PII). This unique wallet has the potential to securely hold personal identifiable information (PII) and control access to it by other individuals or entities through a combination of encryption, cryptographic techniques, and smart contracts.

Data encryption for PII is first performed on the user's device before being stored on the blockchain. And, in fact, the user's PII is not actually stored on the blockchain. Rather, the PII is locally transformed into a ciphertext using cryptographic algorithms, for example, using homomorphic encryption techniques. The ciphertext is stored locally on, or on a storage device accessible to, the user's device. Only a hash of the ciphertext is written to the blockchain. Only authorized parties with the decryption keys can access and read the PII. Access control events, such as login attempts or permission changes, can be recorded on a blockchain in an immutable and tamper-proof manner. This ensures that no one can alter or manipulate access logs, providing a transparent audit trail for access control actions.

The embodiments use decentralized storage for PII. Storing PII on a decentralized blockchain network helps distribute the PII across multiple nodes, making it more resistant to unauthorized access. The wallet also employs a securely managed access control to either provide or deny access to personal records.

Records can be granted individually or as a whole using Role-Based-Access-Control (RBAC) systems, where permissions are assigned to roles rather than individual users. Access control policies can be encoded in smart contracts, making it easy to manage and update access rights for various roles within an organization or system. There are times where multiple organizations or entities need to collaborate while maintaining strict access control. Blockchain can facilitate and secure such inter-organizational access management. Smart contracts can enforce access permissions and data sharing agreements between parties.

An identity management system implements a robust series of verification methods that verify the identities of users or entities before granting them access to the PII stored on the blockchain. This can be done through digital identity verification processes, scanning QR codes, one-time-password links, etc.

Access control smart contracts define and enforce access control rules. These smart contracts can specify who has permission to access certain PII and under what conditions. When an entity wants to access PII, the smart contract is triggered to check if they meet the predefined criteria.

Another layer of security is using permissioned blockchains for handling PII. In a permissioned blockchain, network participants are known and must be granted access by the network administrator. This allows for more control over who can access the data.

Embodiments of the invention also employ the use of private keys and wallets to access and interact with the blockchain. These keys are necessary to initiate transactions, including requests to access PII.

Embodiments of the invention also employ the use of audit trails for auditing and monitoring access to PII. This can be achieved by recording all access requests and changes to the data, providing transparency and accountability.

Legal compliance ensures that use of blockchain for PII complies with data protection regulations, such as GDPR in Europe. Blockchain technology can help with compliance by providing a transparent and immutable record of data access.

Revocation of Access can also be implemented using smart contracts. Smart contracts can also enable the revocation of access to PII when certain conditions are no longer met or if an entity or individual loses authorization.

In some cases, multiple signatures may be required to perform certain actions. Multi-signature wallets, controlled by a predefined group of individuals or entities, can be used to add an extra layer of access control. In the case of minors giving access to their PII, it requires the action of a parent/guardian of the minor's digital wallet.

Smart contracts can maintain whitelists (allowed addresses) and blacklists (blocked addresses) to control access. NFTs may only be transferred to addresses on the whitelist, or certain addresses may be prevented from interacting with the NFT.

### Automatic information surfacing on webpage with various actions

Information surfacing is a process or technique used to bring relevant or important information to the forefront of a user's attention in a particular context without the user having to initiate a search for such information, i.e., without the user, e.g., needing to launch a browser or new browser window and perform a search via a search engine such as the Google or Bing. In one embodiment, automatic information surfacing involves automatically presenting, e.g., via a chatbot, specific pieces of information or content in a way that makes the information or content more visible, accessible, or prominent, while potentially filtering out less relevant or less important information. The goal of information surfacing is to help users quickly find the information they need or want, reducing the effort required to sift through a large amount of data or content.

The effectiveness of information surfacing depends on the quality of the algorithms and data used, as well as the ability of the system to understand and anticipate the user's preferences and needs. When done well, information surfacing can enhance user experience by saving time and helping users discover relevant content in a cluttered digital environment.

Embodiments of the invention focus on information surfacing through one or more techniques including automated page summary, highlighting, heatmapping, curated and noncurated external links, and related or unrelated multimedia.

Automated page summary allows the system to quickly scan through the webpage that is being loaded/visited and provide a highlight of the webpage. A page summary is a concise and condensed version of the content on a single webpage or web document. It provides an overview of the main points, key information, and significant details presented on the page. Page summaries are often used to save time, quickly find key points or essential information.

Highlighting for information surfacing allows users to highlight words or phrases on the webpage to surface more related information about that topic. Links of curated or noncurated information are provided as users highlight the information or links they need at that moment. At no time is the user required to ever leave the current page that they are on to receive this information. The information is presented to them either through a chatbot plugin or through a dedicated web browser that has these features built into its system.

Heatmapping is another way to process a page or an article for information surfacing. Heatmapping is a data visualization technique used to represent the concentration, density, or distribution of a specific data set over a spatial or graphical area. Heatmaps are particularly popular in fields such as data analysis, user experience (UX) design, web analytics, and scientific research. They provide a visual representation of data patterns, making it easier to interpret and draw insights from the data. These methods include intensity and density visualization, data overlays, and behavior analysis (mouse clicks, mouse hovers, scrolling, and time-series).

Intensity and density visualization and data overlays shows which area(s) or topics on the page are most important by showing color concentrations. Areas that have the highest interest are usually coded in one set of colors, such as orange and reds, while areas that have less density are usually shown in another set of colors, such as blue and green. This helps users determine the most important or interesting parts of the page. Automatic summaries are also generated for these areas.

Behavior analysis in heatmapping is also important. It shows what gets clicked on, where users hover their mouse, how fast they scroll, and how long they stay in a particular section. As more individuals use the tool and visit the page, it becomes clear what specific trends are on the page. This will also help with information surfacing in the long run.

All these tools help automate the information surfacing portion, predicting what the user may be interested when visiting a particular webpage, reading a particular online article, or just want to get more in-depth information on a particular topic related to the information on the screen.

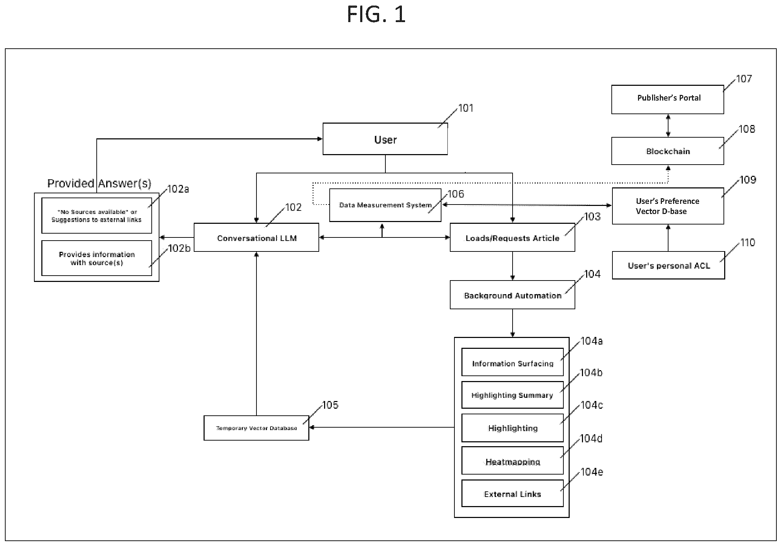

Functional features and/or aspects of embodiments of the invention are further discussed below in connection with the functional block diagrams depicted in FIGS. 1-4, wherein a functional block in the figures corresponding to a respective functional feature/aspect discussed below is illustrated and referenced by the same number associated with each functional feature/aspect discussed below.

**101.** FIG. 1 depicts a user's interaction with publisher's data according to embodiments of the invention.

**102.** In one embodiment, a conversational model interface, for example, a chatbot, allows users to interact with the model using natural language. Users can ask general questions or request specific journal articles, providing them with a flexible and intuitive way to access information.

The chatbot is designed to understand natural language queries and provide relevant responses based on the user's question. For example, a user may ask for all articles published in 2019 by a particular author, and the chatbot will provide them with a list of matching articles.

Additionally, the chatbot can be programmed to respond to specific types of queries or requests, allowing it to provide users with more tailored information as needed. For example, a user may ask for a summary of a particular article, and the chatbot will provide them with a brief overview of the article's key findings.

**102A.** The chatbot is designed to prioritize accuracy and transparency when providing answers to user queries. To achieve this goal, the chatbot relies on a comprehensive database of resources and information provided by the publisher, ensuring that all responses are backed by reliable sources.

If the requested information is not found in the publisher's database or resources, the chatbot provides an appropriate response indicating that no source was available or that the topic could not be found. This approach helps to maintain the integrity of the system and prevents the chatbot from providing false or misleading information.

In addition, the chatbot is programmed to access external sources if it is connected to the internet, offering users even more extensive and up-to-date information. However, this feature is subject to the publisher's approval and may be restricted in some cases to maintain data privacy and security.

By prioritizing accuracy and transparency, the chatbot helps to build trust with its users and enhances their overall experience when interacting with the system. This approach also ensures that the chatbot remains accountable for the information it provides, providing a valuable tool for both users and publishers alike.

**102B.** The chatbot is designed to provide a comprehensive and streamlined experience for users when searching for information. In addition to providing an initial response to the user's query, the chatbot may also offer a summary of the search results, highlighting key points and providing additional context to help users better understand the topic.

To further enhance the user experience, the chatbot can provide access to all relevant resources, including journal articles, web links, or any other data type that is available through the publisher's database. Users can click on these resource links to open a window with the full article, making it easy to view and interact with multiple resources simultaneously if needed.

Furthermore, the chatbot may highlight the sections of the articles where the requested information was found, simplifying and expediting the discovery process for users. This feature can be particularly helpful when dealing with large or complex documents, allowing users to quickly find the most relevant and informative sections.

By providing a comprehensive and user-friendly experience, the chatbot helps to save users time and effort when searching for information, making it an indispensable tool in many research and academic contexts. The ability to highlight key sections of articles and jump directly to them also enhances the overall user experience, making it easier and more efficient to find the information needed.

**103.** The chatbot is designed to offer users flexibility and convenience when searching for specific information. In addition to providing access to articles and other resources through its database, the chatbot allows users to load or request specific articles directly.

The process of loading an article is straightforward and intuitive. If the user has a local data source (such as a PDF file), they can simply drag and drop it into the chatbot interface, allowing the system to quickly retrieve and display the information contained within the document.

Alternatively, if the user needs access to articles published by a specific publisher or related to a particular topic, they can request these resources directly through the chatbot. The system then searches its database and provide links to the relevant articles, allowing users to load them with just a few clicks.

By offering both options, the chatbot ensures that users have access to the information they need in the format that is most convenient for them. This flexibility helps to make the system more user-friendly and efficient, saving time and effort when searching for specific information.

**104.** The system is designed with a sophisticated automation process that works in the background to enhance the user experience during conversations, requests to load articles, or while visiting a website. This process includes several key features that help to simplify and expedite the discovery of information.

**104A.** Information Surfacing: the system automatically surfaces relevant information based on the user's query or request, providing users with a comprehensive summary of the search results. The chatbot uses advanced algorithms and machine learning techniques to analyze the user's query and identify the most relevant articles and resources, ensuring that users receive accurate and up-to-date information quickly.

**104B, 104C.** Highlighting/Highlighting Summary: the system automatically highlights key sections of the articles that are most likely to be relevant to the user's query or request. This feature helps to simplify the discovery process by allowing users to quickly focus on the most important information. The chatbot can also allow users to customize their preferences for what sections of an article they want to see highlighted, making it even more personalized and efficient.

**104D.** Heatmapping: the system automatically records heatmap data as users interact with the articles, providing insights into which sections of the documents are most important or engaging for the user. This feature can help users refine their search queries in the future, ensuring that they receive even more relevant information.

**104E.** External Links: the system automatically provides external links to additional resources and articles that may be of interest to the user, helping to expand their knowledge and understanding of the topic at hand. This feature ensures that users have access to a wide range of perspectives and information sources, making it easier for them to form well-rounded opinions and make informed decisions.

By implementing one or more of these automation processes 104a-104e in the background, the chatbot enhances the overall user experience by providing a personalized, efficient, and comprehensive discovery process. This feature helps to save users time and effort, allowing them to focus on the most important information and gain a deeper understanding of the topic at hand.

**105.** A vector database is used to store relevant information for each user session. This database is designed to store pertinent information generated during the conversation or request to load articles (from 103) for the current session. Sessions can be saved by the user for future recall, allowing them to easily access and review previously generated information.

However, it's important to note that the vector database is not a permanent storage system and will not be used to train the Model. This means that the information stored in the vector database is specific to the current session and cannot be accessed or used by anyone else at any time. The sessions are also encrypted and can only be decrypted by the user accessing that information.

Additionally, users can permanently delete the session if they no longer need the information stored within it. This feature provides users with control over their data and allows them to manage their sessions as needed.

By utilizing a vector database in this way, the chatbot ensures that users have access to relevant and personalized information for each session while also providing them with control over their data. This feature helps to streamline the research or study process by allowing users to quickly access and review previously generated information, saving time and effort.

**106.** A multi-functional data measurement system (DMS) is used to track and record various aspects of data usage during the conversation or the request to load articles. The DMS is designed to automatically record information about user data preferences, requests, and access onto the blockchain 108. This system serves as an auditing tool for publishers to verify how and when the data was accessed. The meaning of "how" in this context refers to two different ways that users can access information: through a query and by opening the full article and querying within the article itself. The DMS can track both methods of access, providing a comprehensive picture of user behavior and preferences and record the tracking on the blockchain.

In addition to tracking access to data, the DMS also allows publishers to assign different weights and measures to different types of access. This feature enables publishers to control how much value they place on different forms of usage and helps them understand how their content is being consumed by users.

The use of a blockchain-based data measurement system helps to ensure that data is accurately tracked and recorded, providing valuable insights for both users and publishers. This information can be used to inform publishers of trends and interests as well.

**107.** Publishers can manage access to articles and control how data is being used through a portal 107 that allows them to configure the smart contract. This portal provides publishers with complete control over their content and enables them to monitor data usage and set limits on access as needed.

Through the portal, publishers can review data access, patterns, and see which articles are being accessed most frequently. This information can be used to inform future content creation or improve user experience. Publishers can also limit access to specific articles or sections of articles based on a variety of criteria, such as geographical location/region, affiliation, or IP address.

Additionally, publishers can grant access to articles through the portal by configuring the smart contract to allow certain users or groups access to specific content. This feature enables publishers to tailor their content offerings to meet the needs of different users and ensure that they have access to the information they need.

The use of a publisher portal allows for greater control over data usage and access to articles, providing valuable insights into user behavior and preferences.

**108.** A blockchain is a decentralized, distributed ledger that records and maintains transactions in a secure and transparent manner. It is made up of blocks of data that are linked together using cryptographic algorithms to form a chain. Each block contains information about one or more transactions, as well as a reference to the previous block in the chain.

The use of a blockchain helps ensure the security and transparency of data transactions in the system. A blockchain is a decentralized, distributed ledger that records and maintains transactions in a secure and transparent manner. It is made up of blocks of data that are linked together using cryptographic algorithms to form a chain.

Each block contains information about one or more transactions, as well as a reference to the previous block in the chain. This creates an immutable record of all transactions that have taken place within the system, ensuring that data is accurately tracked and recorded.

The use of a blockchain also helps ensure the security of data in the system. Because it is a decentralized ledger, there is no single point of failure or control, making it more difficult for hackers to compromise the system. Additionally, the use of cryptographic algorithms ensures that data is secure and tamper-proof, preventing unauthorized access or modification.

The use of a blockchain helps ensure the security and transparency of data transactions in the system, providing valuable insights into user behavior and preferences. This information can be used to inform content creation or inform business decisions, making it an essential tool for publishers in many fields.

**109.** User preferences vector database is used to guide the Generative AI's or conversational LLM's responses. Users can set their preferences for the types of information they want to share or not share during the conversation, which helps the LLM tailor its responses to meet the needs of each individual user.

Some examples of user preferences that may be set include specific topics, publishing dates, particular authors, keywords, phrases, and more. By taking these preferences into account, the Model can provide users with more relevant and personalized information, improving their overall experience.

In addition to improving the user experience, the use of user preferences also helps to ensure that data is accurately tracked and recorded within the system. The LLM uses this information to provide insights into user behavior and preferences, which can be used to inform content creation or inform business decisions.

Overall, the use of user preferences helps guide the conversational LLM, providing users with more relevant and personalized information while also ensuring that data is accurately tracked and recorded within the system. This feature makes the chatbot an indispensable tool for researchers and academics in many fields.

**110.** Users can change their personal access control levels (ACL) for their personal information or preferences. This feature provides users with greater control over their data and enables them to manage their privacy settings as needed.

Users can use their personal ACL to specify which types of information or preferences they want to share or keep private, allowing them to tailor their experience with the chatbot to meet their individual needs. For example, a user may choose to keep certain topics private or restrict access to specific authors or publishing dates.

In addition to providing greater control over privacy settings, the use of a personal ACL helps ensure that data is accurately tracked and recorded within the system. The use of access control levels provides users with greater control over their data, enabling them to manage their privacy settings as needed.

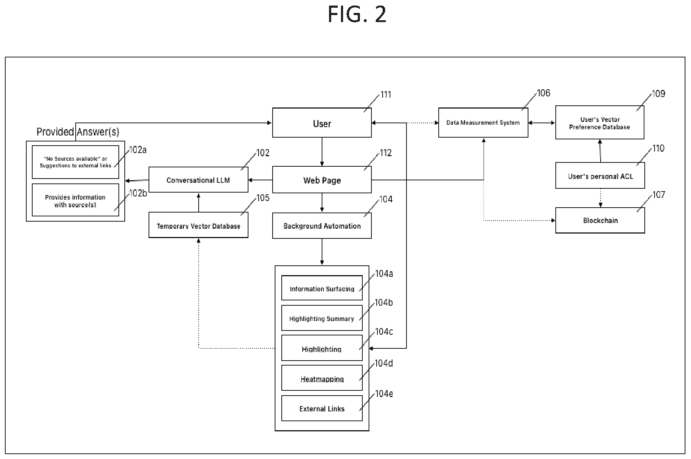

**111.** A user's interaction with a website or a publisher's website (possibly behind a paywall) is illustrated in the functional block diagram in FIG. 2.

**112.** The user visits an informational webpage. This can be any type of website that provides information on a specific topic or subject matter. The chatbot employs web scraping technology to gather information from the webpage and provide relevant information to the user.

For example, if a user visits a scientific journal webpage, the chatbot may use web scraping technology to extract key findings or summaries of articles on that page, providing the user with a concise overview of the latest research in their field.

Similarly, if a user visits an e-commerce website, the chatbot may use web scraping technology to provide information about products and pricing, enabling the user to make informed purchasing decisions.

The use of web scraping technology allows the chatbot to gather information from informational webpages and provide relevant information to the user, making it an indispensable tool for researchers and academics in many fields.

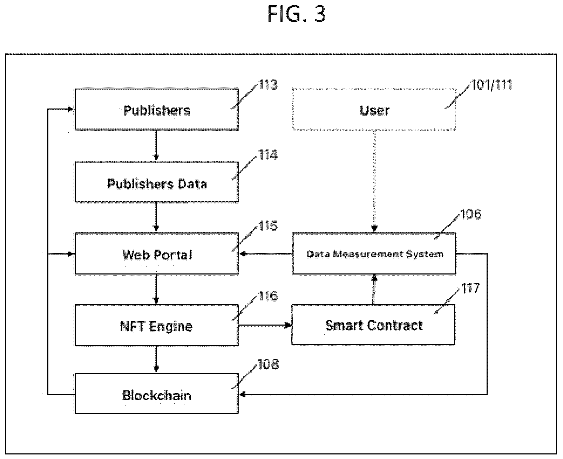

**113.** With reference to FIG. 3, publishers are individuals, organizations, or companies that produce and distribute content to the public. Publishers play a crucial role in this process. The following list highlights some key aspects of what publishers do:
Content Creation: Publishers create original content or acquire content from authors, writers, journalists, and other contributors. This content can take various forms, including books, articles, newspapers, magazines, websites, videos, and more.
Editing and Quality Control: Publishers often have editorial teams that review and edit content for accuracy, clarity, and style. This ensures that the final product meets certain standards and is suitable for the intended audience.
Formatting and Design: Publishers are responsible for the layout, design, and formatting of the content. This includes choosing fonts, arranging text and images, and creating an overall appealing visual presentation.
Distribution: Publishers are involved in the distribution of content to consumers. This may involve printing physical copies of books or magazines, distributing newspapers, or making digital content available online through websites, e-books, or other digital platforms.
Marketing and Promotion: Publishers engage in marketing activities to promote their content and attract an audience. This can include advertising, social media promotion, author interviews, book signings, and other promotional efforts.
Rights Management: Publishers often handle the rights associated with the content they publish. This includes copyright issues, licensing, and permissions for using and distributing the content.
Sales and Monetization: Publishers generate revenue by selling copies of their content. This can involve selling books, magazines, or access to digital content. Publishers may also explore other revenue streams, such as advertising or subscription models.
Audience Engagement: Publishers interact with their audience through various channels. This can include responding to reader feedback, conducting surveys, and maintaining a presence on social media platforms.

**114.** Publisher's data includes but is not limited to uploaded books, articles, newspapers, magazines, websites, videos, and more. Publisher's data may also be accessed via API connections to publisher's database(s). The API connections allow external access from the platform to the publisher's database(s) to interact with the publisher's data programmatically. The following describes how publishers might facilitate API connections.

**115.** Publishers have access to a secure administrative portal where they can check on usage data and other types of information related to their articles or content. This portal provides publishers with valuable insights into how their content is being used and consumed, enabling them to make informed decisions about the distribution and management of their content.

The administrative portal also allows publishers to set and maintain smart contracts that specify the type of data they are providing and the duration for which it is available. Smart contracts are self-executing contracts with the terms of the agreement written into code, allowing for a more secure and efficient way of managing data agreements.

By using smart contracts, publishers can ensure that their content is being used in accordance with their terms and conditions, providing them with greater control over their intellectual property rights. Additionally, the use of smart contracts also helps to reduce administrative overhead, making it easier for publishers to manage their content and agreements.

**116.** A non-fungible token (NFT) engine will generate NFTs on demand for data that is being called through an API from publishers. A NFT is a unique digital asset that represents ownership and authenticity of a piece of data, such as an abstract or summary of an article and regulated with a smart contract.

When a user requests access to a particular article or summary through the chatbot's API, the NFT engine generates an NFT on demand for that specific content. This NFT is then stored along with the corresponding smart contract for future use.

The use of NFTs provides publishers with greater control over their intellectual property rights and helps them manage their content more efficiently. By using NFTs, publishers can ensure that their content is being used in accordance with their terms and conditions, providing them with greater protection against unauthorized access or use.

Additionally, the use of NFTs also makes it easier for publishers to remove access to specific pieces of content if they decide that it should no longer be available through the chatbot's API. If a publisher chooses to remove access to an article or summary, the corresponding NFT and smart contract will also be deleted, ensuring that the data is no longer accessible to unauthorized users.

**117.** A smart contract is a self-executing contract with the terms of the agreement directly written into code. It runs on a blockchain 108, a decentralized and distributed electronic ledger technology. Smart contracts automatically execute and enforce the terms of the contract when predefined conditions are met. They eliminate the need for intermediaries, such as banks or legal entities, and provide transparency and security.

In the context of the automatic division of royalties, a smart contract can be used to streamline and automate the process of distributing payments among multiple parties.

Contract Creation: The terms of the royalty agreement are encoded into a smart contract. This includes details such as the percentage of royalties each party is entitled to, the conditions for payment, and the duration of the agreement.

Blockchain Deployment: The smart contract is deployed on a blockchain, ensuring transparency and immutability. Blockchain is a distributed ledger that records all transactions in a secure and tamper-resistant manner.

Payment Trigger: The smart contract is programmed to automatically execute when specific conditions are met. For royalty distribution, these conditions can include any type of media or other event that triggers royalty payments.

Automatic Royalty Calculation: The smart contract calculates the royalties owed to each party based on the predefined terms. This calculation is done automatically, eliminating the need for manual intervention or intermediaries.

Secure and Transparent Transactions: The transactions and calculations are recorded on the blockchain, providing transparency and security. All parties involved can verify the details of the transactions, ensuring trust in the payment process.

Instantaneous Execution: Once the triggering event occurs, the smart contract immediately executes the payment distribution. This results in timely and efficient royalty payments without delays or the need for additional administrative steps.

Cost Reduction: By automating the royalty division process, smart contracts reduce the need for intermediaries, paperwork, and administrative overhead. This can lead to cost savings for all parties involved.

Global Accessibility: Since blockchain is a decentralized technology, smart contracts can facilitate royalty distribution on a global scale. Payments can be made in a secure and automated manner, regardless of the geographical location of the parties.

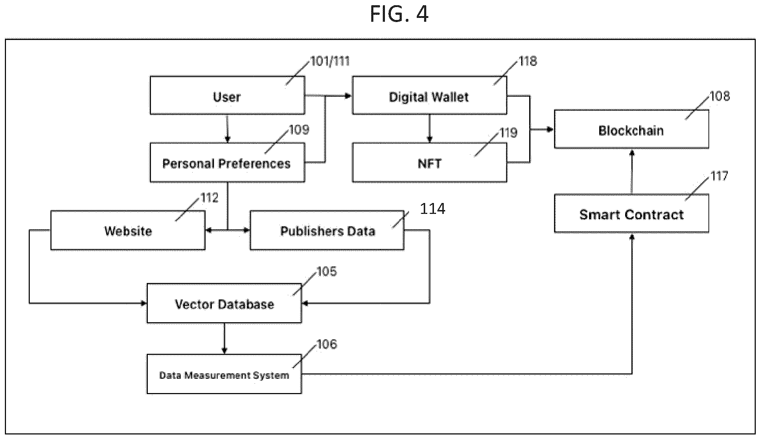

**118.** With reference to FIG. 4, a functional block diagram of a user's interaction with the blockchain is illustrated, according to embodiments of the invention. A digital wallet 118 for personal preference information, personal identifiable information (PII) data, NFTs, and other digital assets is a software application that allows users to store, manage, and transact with their cryptocurrencies. It provides a secure and user-friendly interface for interacting with various blockchain networks.

Following is a breakdown of key aspects related to digital wallets and their capabilities:
Transaction Management: The wallet facilitates the creation and signing of transactions of accessed information, which are then broadcasted to the respective blockchain for confirmation.
Personal Identifiable Information: The digital wallets allow users to associate additional information with their accounts. This can include profile details, transaction history, and other metadata.
Non-Fungible Tokens (NFTs): Digital wallets have expanded beyond just storing cryptocurrencies. They can support the storage and management of non-fungible tokens (NFTs). NFTs are unique digital assets that represent ownership or proof of authenticity for digital or physical items.
NFT Wallet Functionality: NFT-compatible wallets provide a dedicated space for users to store, view, and transfer their NFTs. The wallet interface includes features specific to NFTs, such as a gallery view of owned tokens, details about the NFTs, and the ability to read and/or buy and download or store journal articles, books, or documents relating to particular NFTs.
Interoperability: The digital wallet also aims for interoperability, allowing users to manage NFTs within the same application. This seamless integration provides a unified experience for users dealing with various digital assets and growth for use on various blockchains.
Metadata and Content: NFTs often come with associated metadata and content, such as images, videos, or documents. Wallets that support NFTs typically enable users to view these associated files and details directly within the wallet interface.

**119.** NFTs, or Non-Fungible Tokens, are unique digital assets that represent ownership or proof of authenticity of a specific item or piece of content using blockchain technology. Unlike cryptocurrencies such as Bitcoin or Ethereum, which are fungible and can be exchanged on a one-to-one basis, each NFT has distinct properties that make it one-of-a-kind and cannot be replicated or replaced.

Key features of NFTs include:
Uniqueness: Each NFT has a unique identifier and set of properties that distinguish it from any other token. This uniqueness is often achieved through the use of cryptographic techniques.
Indivisibility: NFTs cannot be divided into smaller units like cryptocurrencies. They are typically bought, sold, and owned as whole units.
Ownership and Proof of Authenticity: NFTs use blockchain technology to establish ownership and verify the authenticity of digital assets. The blockchain ensures transparency and immutability of ownership records.
Interoperability: NFTs can represent various types of digital or physical assets. In this case, we are focusing on documents, articles, and books. However, it should not be limited to just these items.
Smart Contracts: NFTs often leverage smart contracts, self-executing code on a blockchain, to define and automate certain functionalities. Smart contracts can include details about ownership transfer, royalties for creators, and other rules associated with the NFT.
Digital Ownership and Transferability: NFTs provide a way for individuals to claim ownership of digital content in a secure and decentralized manner. Ownership transfer is facilitated through blockchain transactions.

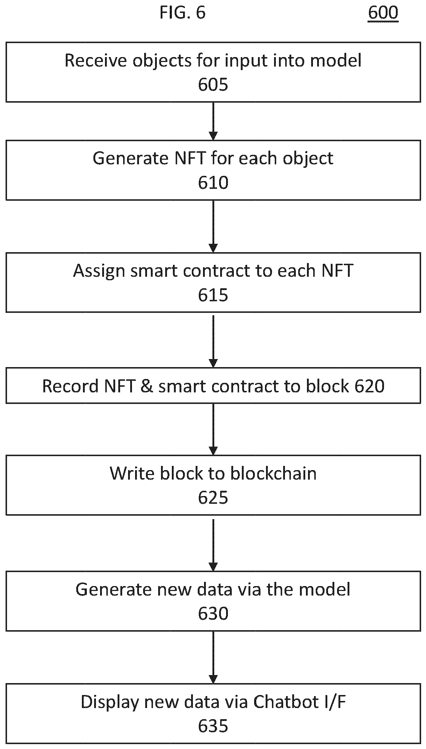

Thus, with reference to the flowchart 600 depicted in FIG. 6, described herein is a computer-implemented method for tracking data input to a generative artificial intelligence model (generative AI) or a large language model (LLM), comprising: receiving at logic block 605 a plurality of objects comprising the data input to the model; generating at logic block 610 a corresponding non-fungible token (NFT) for each object; assigning at logic block 615 a corresponding smart contract to each NFT to control interactions with the NFT and its corresponding object; recording at logic block 620 the NFT and corresponding smart contract to a block for writing to a blockchain; and writing at logic block 625 the block to the blockchain.

According to one embodiment, assigning the corresponding smart contract to each NFT to control interactions with the NFT and its corresponding object, comprises assigning a corresponding smart contract to each NFT that specifies permissions or restrictions to access, use, or distribute, the NFT and its corresponding object.

According to one embodiment, assigning the corresponding smart contract to each NFT that specifies permissions or restrictions to access, use, or distribute the NFT and its corresponding object, comprises assigning the corresponding smart contract to each NFT that specifies remuneration for accessing, using, or distributing the NFT and its corresponding object.

Additionally, according to an embodiment, the method further comprises generating at logic block 630 new data via the model based on the plurality of objects comprising data input to the model and the corresponding smart contract to each NFT that specifies permissions or restrictions to access, use, or distribute, the NFT and its corresponding object. According to such an embodiment, receiving the plurality of objects comprising the data input to the model, comprises a chatbot and associated interface receiving the plurality of objects from a webpage in real time; and generating the new data via the model based on the plurality of objects, comprises generating the new data via the model based on the plurality of objects received from the webpage.

The method further comprises displaying at logic block 635 in real-time the new data via the associated chatbot interface, separated from the plurality of objects from the webpage. According to one embodiment, displaying in real-time the new data via the associated chatbot interface comprising displaying in real-time the new data including one or more of: one or more highlights of the plurality of objects received from the webpage; a heatmap representing a concentration, density, or distribution of a specific data set over a spatial area based on the plurality of objects received from the webpage; an automated web page summary; one or more external links to curated or non-curated information or related multimedia content based on the plurality of objects received from the webpage.

An embodiment may also analyze the new data for accuracy and/or reliability. In such an embodiment, generating new data via the model based on the data input to the model, comprises generating new qualitative and/or quantitative data; and analyzing the new data for accuracy or reliability comprises analyzing the new qualitative and/or quantitative data for accuracy and/or reliability.

One embodiment further comprises tracking how and when the plurality of objects comprising data input to the model are accessed according to the corresponding smart contract to each NFT that specifies permissions or restrictions to access, use, or distribute, the NFT and its corresponding object. In one embodiment, tracking how and when the plurality of objects comprising data input to the model are accessed according to the corresponding smart contract to each NFT that specifies permissions or restrictions to access, use, or distribute, the NFT and its corresponding object, comprising recording to a blockchain how and when the plurality of objects comprising data input to the model are accessed. In one embodiment, tracking how and when the plurality of objects comprising data input to the model are accessed comprises tracking whether a document comprising data input to the model is accessed through one of two types of access: a query, and opening the document and querying within the document itself. Such an embodiment may further comprise assigning a respective weight to each of the two types of access; and measuring accesses to the document based on the respective weight assigned to each of the two types of access.

In one embodiment, assigning the corresponding smart contract to each NFT that specifies permissions or restrictions to access, use, or distribute, the NFT and its corresponding object, comprises establishing via the corresponding smart contract to each NFT an expiration or a renewal to access, use, or distribute, the NFT and its corresponding object.

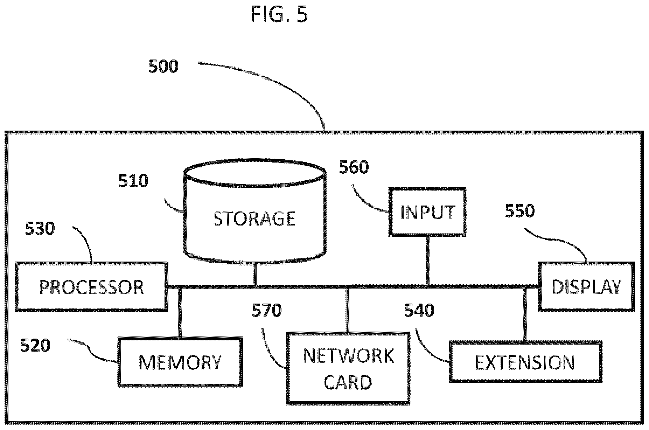

FIG. 5 is a block diagram for a computing device 500, which is configured to perform operations, tasks, or features of computers/servers/mobile devices disclosed herein. The computing device 500 may be connected to one or more external devices and control or perform the functions or steps of the methods described herein. The computing device 500 may include, by way of non-limiting examples, server computers, desktop computers, laptop computers, notebook computers, sub-notebook computers, netbook computers, netpad computers, set-top computers, handheld computers, Internet appliances, mobile smartphones, tablet computers, personal digital assistants, embedded computers, wearable computing devices (e.g., AR/VR devices, Google Glass, smart watches, etc.), cloud servers, and any other devices capable of performing calculations. Those of skill in the art will recognize that many mobile or smart phones are suitable for use in the system described herein. Suitable tablet computers include those with booklet, slate, and convertible configurations, known to those of skill in the art. In various aspects, the computing device 500 includes an operating system configured to perform executable instructions. The operating system is, for example, software, including programs and data, which manages the device's hardware and provides services for execution of applications. Those of skill in the art will recognize that suitable server operating systems include, by way of non-limiting examples, FreeBSD, OpenBSD, NetBSD^{®}, Linux, Apple^{®} Mac OS X Server^{®}, Oracle^{®} Solaris^{®}, and Windows Server^{®}. Those of skill in the art will recognize that suitable personal computer operating systems include, by way of non-limiting examples, Microsoft^{®} Windows^{®}, Apple^{®} Mac OS X^{®}, UNIX^{®}, and UNIX-like operating systems such as GNU/Linux^{®}. In various aspects, the operating system is provided by cloud computing. Those of skill in the art will also recognize that suitable mobile smart phone operating systems include, by way of non-limiting examples, Nokia^{®} Symbian^{®} OS, Apple^{®} iOS^{®}, Research In Motion^{®} BlackBerry OSO, Google^{®} Android^{®}, Microsoft^{®} Windows Phone^{®} OS, Microsoft^{®} Windows Mobile^{®} OS, Linux^{®}, and Palm^{®} WebOS^{®}.

In various aspects, the computing device 500 may include storage 510. The storage 510 is one or more physical apparatus used to store data (e.g., distributed ledgers, smart contracts, blocks in the distributed ledger) or programs (e.g., hashing functions, minting module, etc.) on a temporary or permanent basis. In various aspects, the storage 510 may be volatile memory and requires power to maintain stored information. In various aspects, the storage 510 may be non-volatile memory and retains stored information when the computing device 500 is not powered. In various aspects, the non-volatile memory includes flash memory. In various aspects, the non-volatile memory includes dynamic random- access memory (DRAM). In various aspects, the non-volatile memory includes ferroelectric random-access memory (FRAM). In various aspects, the non-volatile memory includes phase-change random access memory (PRAM). In various aspects, the storage 510 includes, by way of non-limiting examples, CD-ROMs, DVDs, flash memory devices, magnetic disk drives, magnetic tapes drives, optical disk drives, solid state drives, and cloud computing- based storage. In various aspects, the storage 510 may be a combination of devices such as those disclosed herein.

The computing device 500 further includes a processor 530, a memory 520, an extension 540, a display 550, an input device 560, and a network card 570. The processor 530 is considered as a brain to the computing device 500. The processor 530 executes instructions which implement tasks or functions of programs. When a user executes a program or the program is automatically executed based on a batch process, the processor 530 reads the program stored in the storage 510, loads the program on the RAM, and executes instructions prescribed by the program.

The processor 530 may include a microprocessor, central processing unit (CPU), application specific integrated circuit (ASIC), arithmetic coprocessor, graphic processor, or image processor, each of which is electronic circuitry within a computer that carries out instructions of one or more computer programs by performing the basic arithmetic, logical, control, and input/output (I/O) operations specified by the instructions.

In embodiments, the extension 540 may include several connectors or ports, such as one or more universal serial buses (USBs), parallel ports, and/or expansion slots such as peripheral component interconnect (PCI) and PCI express (PCIe). The extension 540 is not limited to the list but may include other slots or ports that can be used for appropriate purposes. The extension 540 may be used to install hardware or add additional functionalities to a computer that may facilitate the purposes of the computer. For example, a USB port can be used for adding additional storage to the computer.

In various aspects, the display 550 may be a cathode ray tube (CRT), a liquid crystal display (LCD), or light emitting diode (LED). In various aspects, the display 550 may be a thin film transistor liquid crystal display (TFT-LCD). In various aspects, the display 550 may be an organic light emitting diode (OLED) display. In various aspects, the OLED display is a passive-matrix OLED (PMOLED) or active-matrix OLED (AMOLED) display. In various aspects, the display 550 may be a plasma display. In various aspects, the display 550 may be a video projector. In various aspects, the display may be interactive (e.g., having a touch screen or a sensor such as a camera, a 3D sensor, a LiDAR, a radar, etc.) that can detect user interactions/gestures/responses and the like. In still various aspects, the display 550 may be a hologram projector configured to project 3D objects.

A user may input and/or modify data via the input device 560 that may include a keyboard, a mouse, or any other device with which the user may input data. The display 550 may be a touch screen so that the display 550 can be used as the input device 560.

The network card 570 is used to communicate with other computing devices, wirelessly or via a wired connection. Through the network card 570, the computing device 500 may receive, modify, and/or update data from and to external devices.

Any of the herein described methods, programs, hashing algorithms, smart contracts, or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, C#, Delphi, Fortran, Java, JavaScript, machine code, operating system command languages, Pascal, Perl, PL1, python, scripting languages, Visual Basic, metalanguages which themselves specify programs, and all first, second, third, fourth, fifth, or further generation computer languages. Also included are database and other data schemas, and any other metalanguages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While several aspects of the disclosure have been shown in the drawings, it is not intended that the disclosure be limited thereto, as it is intended that the disclosure be as broad in scope as the art will allow and that the specification be read likewise. It is to be understood, therefore, that the present disclosure is not limited to the precise aspects described, and that various other changes and modifications may be affected by one skilled in the art without departing from the scope or spirit of the disclosure. Additionally, the elements and features shown and described in connection with certain aspects may be combined with the elements and features of certain other aspects without departing from the scope of the present disclosure, and that such modifications and variation are also included within the scope of the present disclosure. Therefore, the above description should not be construed as limiting, but merely as exemplifications of preferred aspects. Thus, the scope of the aspects should be determined by the appended claims and their legal equivalents, rather than by the examples given.

## Claims

1. A computer-implemented method for tracking data input to a generative artificial intelligence model (generative AI) or a large language model (LLM), collectively referred to hereinbelow as "the model", comprising:
receiving at an interface of a computing device a plurality of objects comprising the data input to the model;
executing logic on the computing device for:
generating a corresponding non-fungible token (NFT) for each object;
assigning a corresponding smart contract to each NFT to control interactions with the NFT and its corresponding object;
recording the NFT and corresponding smart contract to a block for writing to a blockchain; and
writing the block to the blockchain.

2. The computer-implemented method of claim 1, wherein assigning the corresponding smart contract to each NFT to control interactions with the NFT and its corresponding object, comprises assigning a corresponding smart contract to each NFT that specifies one or more of: permissions or restrictions to a type of object to which access to the corresponding NFT is being provided; access to the NFT and its corresponding object; duration of access to the NFT and its corresponding object; manner of use of the NFT and its corresponding object; distribution of the NFT and its corresponding object; remuneration for accessing, using, or distributing the NFT and its corresponding object; and management of the NFT and its corresponding object.

3. The computer-implemented method of claim 2, wherein assigning the corresponding smart contract to each NFT that specifies permissions or restrictions to access, use, or distribute, the NFT and its corresponding object, comprises establishing via the corresponding smart contract to each NFT an expiration or a renewal date to access, use, or distribute, the NFT and its corresponding object.

4. The computer-implemented method of any one of the preceding claims, further comprising:
executing logic on the computing device for generating new data via the model based on the plurality of objects comprising the data input to the model and the corresponding smart contract for each NFT that specifies permissions or restrictions to access, use, or distribute, the NFT and its corresponding object.

5. The computer-implemented method of claim 4,
wherein receiving the plurality of objects comprising the data input to the model, comprises a chatbot and associated interface receiving the plurality of objects from a webpage in real time; and
wherein generating the new data via the model, comprises generating the new data via the model based on the plurality of objects received from the webpage; and
the computer-implemented method further comprising executing logic on the computing device for displaying in real-time the new data via the associated chatbot interface, separated from the plurality of objects received from the webpage.

6. The computer-implemented method of claim 5, wherein displaying in real-time the new data via the associated chatbot interface, comprises displaying in real-time the new data including one or more of: one or more highlights of the plurality of objects received from the webpage; a heatmap representing a concentration, density, or distribution of a specific data set over a spatial area based on the plurality of objects received from the webpage; an automated web page summary; and one or more external links to curated or non-curated information or related multimedia content based on the plurality of objects received from the webpage.

7. The computer-implemented method of any one of claims 4 to 6, further comprising executing logic on the computing device for analyzing the new data for one or both of accuracy and reliability.

8. The computer-implemented method of claim 7,
wherein generating new data via the model based on the data input to the model, comprises generating one or both of new qualitative and quantitative data; and
wherein analyzing the new data for accuracy or reliability comprises analyzing the new qualitative and quantitative data for accuracy and/or reliability.

9. The computer-implemented method of any one of claims 4 to 8, further comprising executing logic on the computing device for tracking how and when each of the plurality of objects comprising data input to the model is accessed according to the corresponding smart contract for each NFT that specifies permissions or restrictions to access, use, or distribute, the NFT and its corresponding object.

10. The computer-implemented method of claim 9, wherein tracking how and when each of the plurality of objects comprising data input to the model is accessed according to the corresponding smart contract for each NFT that specifies permissions or restrictions to access, use, or distribute, the NFT and its corresponding object, comprises recording to a blockchain how and when each of the plurality of objects comprising data input to the model is accessed.

11. The computer-implemented method of claim 9 or 10, wherein tracking how and when each of the plurality of objects comprising data input to the model is accessed comprises tracking whether a document comprising data input to the model is accessed through one of two types of access: a query, and opening the document and querying within the document itself; and
further comprising executing logic on the computing device for assigning a respective weight to each of the two types of access; and measuring accesses to the document based on the respective weight assigned to each of the two types of access.

12. A system comprising:
a memory to store instructions;
a processor to execute the instructions stored in the memory for tracking data input to a generative artificial intelligence model (generative AI) or a large language model (LLM), collectively referred to hereinbelow as "the model", according to the following operations:
receiving at an interface of a computing device a plurality of objects comprising the data input to the model;
executing logic on the computing device for:
generating a corresponding non-fungible token (NFT) for each object;
assigning a corresponding smart contract to each NFT to control interactions with the NFT and its corresponding object;
recording the NFT and corresponding smart contract to a block for writing to a blockchain; and
writing the block to the blockchain.

13. The system of claim 12, wherein assigning the corresponding smart contract to each NFT to control interactions with the NFT and its corresponding object, comprises assigning a corresponding smart contract to each NFT that specifies permissions or restrictions to a type of object to which access to the corresponding NFT is being provided, access to the NFT and its corresponding object, duration of access to the NFT and its corresponding object, manner of use of the NFT and its corresponding object, distribution of the NFT and its corresponding object; remuneration for accessing, using, or distributing the NFT and its corresponding object; and management of the NFT and its corresponding object.

14. The system of claim 12 or 13, further comprising:
executing logic on the computing device for generating new data via the model based on the plurality of objects comprising the data input to the model and the corresponding smart contract for each NFT that specifies permissions or restrictions to access, use, or distribute, the NFT and its corresponding object.

15. The system of claim 14,
wherein receiving the plurality of objects comprising the data input to the model, comprises a
chatbot and associated interface receiving the plurality of objects from a webpage in real time; and
wherein generating the new data via the model, comprises generating the new data via the model based on the plurality of objects received from the webpage; and
the computer-implemented method further comprising executing logic on the computing device for displaying in real-time the new data via the associated chatbot interface, separated from the plurality of objects received from the webpage.
